# FASCICULE DE BREVET EUROPEEN

(11) **EP 2 035 146 B1**
(45) Date de publication et mention de la délivrance du brevet: **14.11.2012**
(21) Numéro de dépôt: 07803803.1
(22) Date de dépôt: 28.06.2007
(51) Int. Cl.: B01L 7/02, B01L 9/00, B02C 17/14

(54) **APPAREIL DE BROYAGE D'ECHANTILLONS BIOLOGIQUES**
VORRICHTUNG ZUM ZERKLEINERN BIOLOGISCHER PROBEN
APPARATUS FOR GRINDING BIOLOGICAL SAMPLES

(30) Priorité: 30.06.2006 FR 0605944
(43) Date de publication de la demande: 18.03.2009
(73) Titulaire: Bertin Technologies, 78180 Montigny-le-Bretonneux (FR)
(72) Inventeur: KUNC, Thierry, F-78000 Versailles (FR); BOUGY, Jean-Jacques, F-78890 Garancières (FR); BOQUET, Jean, F-78610 Le Perray-en-Yvelines (FR); VALLAYER, Julien, F-78114 Magny les Hameaux (FR); SOREL, Emmanuelle, F-28260 Rouvres (FR)
(74) Mandataire: Ramey, Daniel
(86) Numéro de dépôt international: PCT/FR2007/001094
(87) Numéro de publication internationale: WO 2008/000962

(56) Documents cités:
- WO-A-89/09437
- DE-C1- 19 755 960
- DE-U1- 29 706 031
- FR-A1- 2 858 057
- US-A- 3 534 914
- US-A- 4 295 613
- US-A- 5 577 837
- US-B1- 6 235 501

## Description

L'invention concerne un appareil de broyage d'échantillons biologiques, comprenant un plateau de support de tubes contenant des échantillons et des moyens d'entraînement du plateau en mouvement oscillant autour d'un centre de rotation situé sur l'axe du plateau.

Un tel appareil est décrit en particulier dans les documents WO-A-2004/012851 et FR-A-2 872 233 et comprend des paliers concentriques montés l'un à l'intérieur de l'autre pour le support et le centrage du plateau porte-tubes, ces paliers étant disposés entre une partie suspendue élastiquement de l'appareil et un arbre d'entraînement portant le plateau.

Le plateau est immobilisé en rotation autour de l'arbre d'entraînement de sorte que les tubes contenant les échantillons sont soumis à un mouvement alternatif curviligne à fréquence élevée et que les échantillons qu'ils contiennent sont broyés et homogénéisés par des microbilles, par exemple de verre ou de céramique, contenues avec les échantillons dans les tubes.

Ce type de broyage est très efficace et très rapide mais a pour inconvénient une augmentation assez importante de la température des échantillons dans les tubes. Même lorsque les tubes contenant les échantillons sont refroidis préalablement au broyage, la température des échantillons en fin de broyage peut atteindre ou dépasser des valeurs de l'ordre de 60 à 70° C, auxquelles certaines caractéristiques des échantillons sont modifiées de façon irréversible. C'est le cas par exemple des protéines dont l'activité est déterminée à la fois par leur séquence et par leur structure tridimensionnelle, cette structure étant détruite par chauffage.

Le document US 6,235,501 décrit un appareil de broyage d'échantillons biologiques et le document US 5,577,837 décrit un appareil de mélange et d'agitation d'échantillons biologiques.

L'invention a notamment pour but d'apporter une solution simple, efficace, et satisfaisante à ce problème.

Elle propose à cet effet, un appareil de broyage d'échantillons biologiques selon la revendication 1.

Ces moyens de refroidissement, qui peuvent être fixes ou amovibles, permettent de maintenir les échantillons à une température de quelques degrés au-dessus de zéro en fin de broyage, de sorte que la structure tridimensionnelle des protéines contenues dans ces échantillons n'est pas altérée.

Cette paroi annulaire peut être à une température nettement inférieure à celle des tubes et par exemple inférieure à 0°C lorsqu'elle est mise en place sur l'appareil, de façon à absorber la chaleur rayonnée par les tubes portés par le plateau, cette absorption étant suffisante pour maintenir les échantillons contenus dans les tubes à une température de l'ordre de 4°C par exemple, en fin de broyage.

En variante, cette paroi annulaire peut être équipée de moyens d'alimentation ou de circulation d'un fluide froid.

En particulier, cette paroi peut être équipée de conduits de circulation d'un gaz cryogénique tel que l'azote et de buses d'éjection permettant le refroidissement local des tubes par des jets de gaz froid.

Selon une autre variante, cette paroi annulaire peut être équipée de moyens thermoélectriques de refroidissement générant du froid par effet Peltier.

Avantageusement, les moyens de refroidissement selon l'invention comprennent des moyens d'aspiration du gaz réchauffé qui est présent dans la zone refroidie incluant la zone d'oscillation des tubes portés par le plateau.

L'aspiration continue ou discontinue du gaz présent dans cette zone améliore le maintien des tubes à une température basse souhaitée.

L'invention sera mieux comprise et d'autres détails, caractéristiques et avantages de celle-ci apparaîtront plus clairement à la lecture de la description qui suit, faite à titre d'exemple en référence aux dessins annexés, dans lesquels :
- la figure 1 est une vue schématique en coupe axiale d'un appareil qui n'est pas en accord avec l'invention;
- la figure 2 est une vue schématique à plus grande échelle d'une partie de l'appareil de la figure 1 ;
- la figure 3 illustre une variante de réalisation de l'invention .

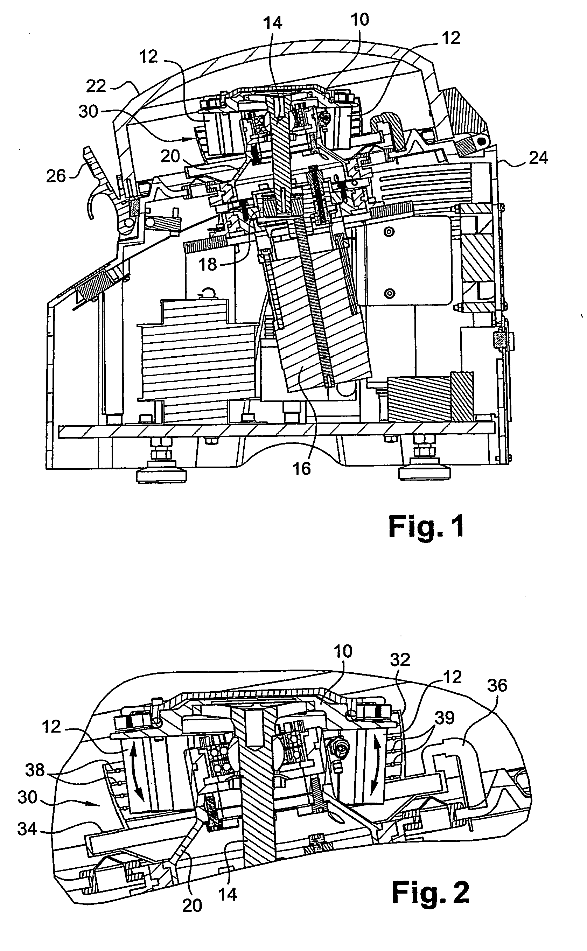

L'appareil de broyage selon l'invention, qui est représenté schématiquement aux figures 1 et 2, est du type décrit dans le document FR-A-2 872 233 et comprend essentiellement un plateau 10 portant des tubes à échantillon 12 à sa périphérie et monté en bout d'un arbre 14 entraîné en mouvement oscillant autour d'un centre de rotation situé sur l'axe de l'arbre, par un moteur électrique 16 au moyen d'un excentrique 18.

L'arbre 14 est supporté et centré sur une partie 20 élastiquement suspendue de l'appareil au moyen d'un système de paliers concentriques montés les uns à l'intérieur des autres, comprenant un palier à rotule et à billes porté par l'arbre 14 et tournant à l'intérieur de deux roulements à billes axialement superposés comme décrit dans le document FR-A-2 872 233.

L'appareil comprend encore, comme représenté en figure 1, un capot pivotant 22 porté par une carrosserie fixe 24 et venant recouvrir le plateau 10 en vue du broyage des échantillons contenus dans les tubes. Des moyens de verrouillage 26 permettent de maintenir le capot 22 dans la position représentée en figure 1 pendant le broyage des échantillons.

Pendant ce broyage, le plateau 10 est immobilisé en rotation autour de l'axe de l'arbre 14 et les tubes 12 sont entraînés en mouvement alternatif curviligne comme indiqué par les flèches en figure 2.

Pour éviter que les échantillons contenus dans les tubes 12 soient portés pendant leur broyage à une température élevée par des microbilles de verre, de céramique ou toute autre matière appropriée contenues dans les tubes, l'appareil prévoit de disposer des moyens de refroidissement 30 autour de la zone d'oscillation des tubes 12, ces moyens 30 comprenant une paroi annulaire 32 en forme de bol, portée par un socle 34 permettant de la positionner et de la fixer sur la partie 20 suspendue élastiquement de l'appareil.

Le socle 34 constitue également une chambre communiquant avec l'espace délimité par la paroi 32 et qui est équipée de moyens d'aspiration d'air, comprenant notamment un conduit d'aspiration 36 qui débouche à l'intérieur du socle 34 par une extrémité et dont l'extrémité opposée est destinée à être reliée à des moyens d'aspiration.

Dans un premier mode de réalisation, les moyens de refroidissement 30 sont réalisés en un matériau présentant de préférence une inertie thermique relativement élevée, et peuvent être portés à une température basse, par exemple de l'ordre de -60 à -100°C par des moyens appropriés, pour être ensuite mis en place dans l'appareil de broyage sur la partie 20 de cet appareil comme représenté en figure 2, juste avant de démarrer le broyage d'une série d'échantillons.

La paroi 32 rayonne alors du froid dans toute la zone d'oscillation des tubes 12 portés par le plateau 10, ce qui permet de maintenir la température des échantillons à des valeurs d'environ 4°C par exemple jusqu'à la fin du broyage.

L'air contenu à l'intérieur de la paroi 32, se réchauffe progressivement pendant le broyage des échantillons et est aspiré à l'extérieur au moyen du conduit 36, pour favoriser le refroidissement des échantillons.

Il est avantageux dans cette forme de réalisation que les moyens de refroidissement 30 puissent être mis en place sur l'appareil et retirés de cet appareil de façon simple et rapide. Ils peuvent être à cet effet équipés de moyens de fixation sur l'appareil qui sont du type à vissage rapide, à baïonnette, à encliquetage, etc.

Dans un autre mode de réalisation de l'appareil, la paroi 32 des moyens de refroidissement est équipée de conduits ou de canaux 38 de circulation d'un fluide froid, permettant de maintenir la température de la paroi 32 à une valeur basse souhaitée, par exemple comprise entre -60 et -100°C. Le fluide froid peut être un gaz cryogénique, tel que l'azote, et les canaux 38 peuvent être équipés de buses 39 d'éjection de gaz froid sur les tubes.

Dans ce cas, les moyens de refroidissement 30 peuvent être fixés à demeure sur la partie suspendue 20 de l'appareil et être alimentés en fluide froid uniquement pour les opérations de broyage d'échantillons.

Dans une autre mode de réalisation, la paroi 32 des moyens de refroidissement peut être équipée d'éléments thermoélectriques générant du froid par effet Peltier.

Dans ce cas, les moyens de refroidissement 30 peuvent également être montés à demeure sur la partie 20 de l'appareil, et leurs éléments thermoélectriques sont alimentés en énergie électrique à l'occasion des opérations de broyage d'échantillons.

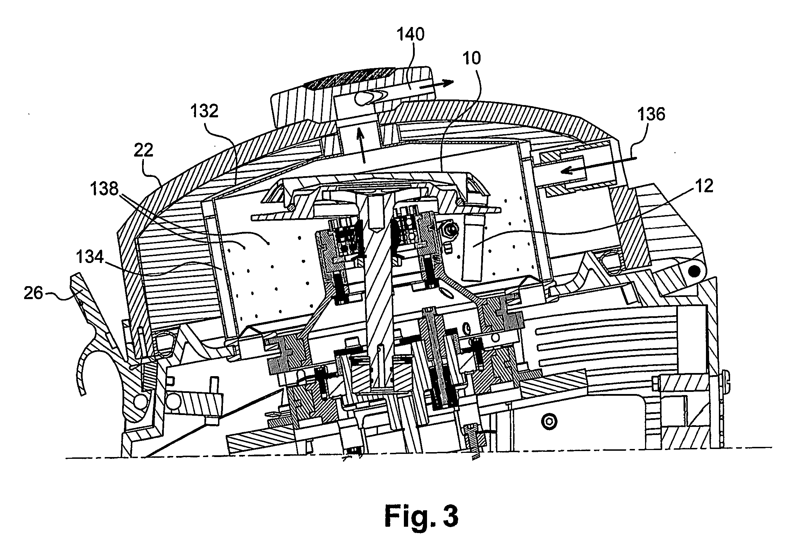

Dans la variante de réalisation de la figure 3, les moyens de refroidissement des tubes comprennent une cloche 132 fixée à l'intérieur du capot 22 de l'appareil, sensiblement au centre de ce capot, de façon à venir coiffer le plateau 10 et les tubes 12 quand le capot est rabattu en position de service et bloqué par les moyens de verrouillage 26.

Dans cette position, le bord inférieur de la cloche 132 est appliqué sur la partie 20 élastiquement suspendue de l'appareil.

La cloche 132 est à double paroi cylindrique. L'intervalle annulaire 134 défini par cette double paroi est raccordé à des moyens 136 d'amenée ou de circulation d'air froid, prévus sur une partie arrière du capot 22. La paroi interne de la cloche 132 comporte une pluralité de perforations 138 de sortie d'air froid, permettant de maintenir les tubes 12 à une température souhaitée pendant le broyage des échantillons.

L'air dans la cloche 132, qui s'est échauffé au contact des tubes 12, est évacué à l'extérieur du capot par un canal 140 formé dans la partie supérieure centrale du capot et de la cloche.

Par exemple, l'air froid amené par les moyens 136 est à une température de - 50° C et la température à l'intérieur de la cloche en fonctionnement est d'environ - 20° C.

## Revendications

1. Appareil pour le broyage d'échantillons biologiques, comprenant un plateau (10) de support de tubes (12) contenant les échantillons et des moyens (16, 18) d'entraînement du plateau en mouvement oscillatoire autour d'un centre de rotation situé sur l'axe du plateau, **caractérisé en ce qu'**il comprend des moyens (132) de refroidissement des tubes, qui sont portés par une partie (20, 22) de l'appareil et entourent le plateau précité pour délimiter une zone refroidie comprenant la zone d'oscillation des tubes (12) portés par le plateau, les moyens de refroidissement (132) comprenant une paroi annulaire (132) sensiblement en forme de cloche, délimitant ladite zone refroidie et comportant des moyens de positionnement ou de fixation sur une partie fixe (20) ou mobile (22) de l'appareil.

2. Appareil selon la revendication 1, **caractérisé en ce que** ladite paroi annulaire (132) est apte à avoir une température inférieure à 0°C pour absorber la chaleur dégagée par les tubes.

3. Appareil selon la revendication 1 ou 2, **caractérisé en ce que** ladite paroi annulaire comprend des moyens (136) d'amenée ou de circulation d'un fluide froid.

4. Appareil selon l'une des revendications précédentes, **caractérisé en ce que** les moyens de refroidissement (132) sont montés de façon fixe ou amovible sur la partie fixe (20) de l'appareil.

5. Appareil selon l'une des revendications précédentes, **caractérisé en ce que** les moyens de refroidissement en forme de cloche (132) sont fixés à l'intérieur d'un capot rabattable (22) de l'appareil, et comprennent des moyens (136) d'amenée d'air froid à l'intérieur de la cloche

6. Appareil selon la revendication 5, **caractérisé en ce que** la cloche (132) est à double paroi, sa paroi interne comportant des perforations (138) de sortie d'air froid.

7. Appareil selon la revendication 5 ou 6, **caractérisé en ce qu'**un canal (140) d'évacuation d'air est formé dans une partie centrale supérieure de la cloche et du capot.

## Claims

1. Apparatus for grinding biological samples, the apparatus comprising a turntable (10) for supporting tubes (12) containing the samples and means (16, 18) for imparting oscillating motion to the turntable about a center of rotation situated on the axis of the turntable, **characterized in that** it comprises tube cooling means (132), which are carried by a portion (20, 22) of the apparatus and surround the above-mentioned turntable to define a cooled zone containing the zone in which the tubes (12) carried by the turntable oscillate, the cooling means (132) comprising an annular wall (132) substantially in the shape of a bell, defining said cooled zone and including means enabling it to be positioned or fastened on a stationary or moving portion (20, 22) of the apparatus.

2. Apparatus according to claim 1, **characterized in that** said annular wall (132) is suitable to have a temperature lower than 0°C in order to absorb the heat given off by the tubes.

3. Apparatus according to claim 1 or claim 2, **characterized in that** said annular wall includes means (136) for delivering or circulating a cold fluid.

4. Apparatus according to any preceding claim, **characterized in that** the cooling means (132) are mounted in fixed or removable manner on the stationary portion (20) of the apparatus.

5. Apparatus according to any preceding claim, **characterized in that** the cooling means in the shape of a bell (132) are fastened inside a closable cover (22) of the apparatus, and comprise means (136) for delivering cold air to the inside of the bell.

6. Apparatus according to claim 5, **characterized in that** the bell (132) is double-walled, its inner wall including cold air outlet perforations (138).

7. Apparatus according to claim 5 or claim 6, **characterized in that** an air exhaust channel (140) is formed in a top central portion of the bell and the cover.

## Patentansprüche

1. Gerät zur Zerkleinerung biologischer Proben, umfassend eine Tragplatte (10) für Röhrchen (12), die die Proben enthalten, und Antriebsmittel (16, 18) für die Platte in einer oszillierenden Bewegung um einen Drehmittelpunkt, der sich auf der Achse der Platte befindet, **dadurch gekennzeichnet, dass** es Mittel (132) zum Abkühlen der Röhrchen umfasst, die von einem Teil (20, 22) des Geräts getragen werden und die vorgenannte Platte umgeben, um eine gekühlte Zone zu begrenzen, die die oszillierende Zone der Röhrchen (12), die von der Platte getragen werden, umfasst wobei die Kühlmittel (132) eine ringförmige Wand (132) im Wesentlichen in Glockenform umfassen, die die Kühlzone begrenzt und Mittel zur Positionierung oder Befestigung auf einem festen (20) oder beweglichen Teil (22) des Geräts umfasst.

2. Gerät nach Anspruch 1, **dadurch gekennzeichnet, dass** die ringförmige Wand (132) eine Temperatur unter 0 °C aufweisen kann, um die von den Röhrchen abgegebene Wärme zu absorbieren.

3. Gerät nach Anspruch 1 oder 2, **dadurch gekennzeichnet, dass** die ringförmige Wand Mittel (136) zur Zuleitung oder Zirkulation eines Kühlfluids umfasst.

4. Gerät nach einem der vorhergehenden Ansprüche, **dadurch gekennzeichnet, dass** die Kühlmittel (132) fest oder abnehmbar auf dem festen Teil (20) des Geräts montiert sind.

5. Gerät nach einem der vorhergehenden Ansprüche, **dadurch gekennzeichnet, dass** die Kühlmittel in Glockenform (132) im Inneren einer umlegbaren Kappe (22) des Geräts angeordnet sind und Mittel (136) zur Zuleitung von Kaltluft in das Innere der Glocke umfassen.

6. Gerät nach Anspruch 5, **dadurch gekennzeichnet, dass** die Glocke (132) eine doppelte Wand aufweist, wobei ihre Innenwand Öffnungen (138) für den Austritt der kalten Luft umfasst.

7. Gerät nach Anspruch 5 oder 6, **dadurch gekennzeichnet, dass** ein Luftableitungskanal (140) in einem oberen Mittelteil der Glocke und der Kappe vorgesehen ist.
